# EUROPEAN PATENT APPLICATION

(11) **EP 2 479 709 A1**
(43) Date of publication of application: **25.07.2012**
(21) Application number: 10816970.7
(22) Date of filing: 23.07.2010
(51) Int. Cl.: G06K 9/20, B07C 3/10, G06K 9/00, G06T 7/00

(54) **IMAGE PROCESSING DEVICE, IMAGE PROCESSING METHOD, SORTER, AND PROGRAM**

(30) Priority: 17.09.2009 JP 2009215626
(71) Applicant: NEC Corporation, Tokyo 108-8001 (JP)
(72) Inventor: NISHIWAKI, Daisuke, Tokyo 108-8001 (JP); KONDOH, Katsuhiko, Tokyo 108-8001 (JP)
(74) Representative: Vossius & Partner
(86) International application number: PCT/JP2010/062411
(87) International publication number: WO 2011/033857

(57) **Abstract**

An image processing device of the present invention is an image processing device that reads an address of a piece of mail, comprising: a storage section that correlatively stores image data of the piece of mail containing an address region in which the address of said piece of mail is present and region data that represent a position of said address region of the piece of mail; an obtaining section that obtains image data of said piece of mail; a search section that searches said storage section for image data that match the image data obtained by said obtaining section with respect to regions other than said address region; an extraction section that extracts a region represented by region data correlated with image data retrieved by said search section as an address region of said piece of mail from the image data obtained by said obtaining section; and a read section that reads an address from the address region extracted by said extraction section.

## Description

### TECHNICAL FIELD

The present invention relates to an image processing device, an image processing method, a sorter, and a program that read addresses that are present on pieces of mail.

### BACKGROUND ART

Sorters that automatically sort flat-sized pieces of mail such as postcards, envelops, or book parcels depending on their addresses are provided with an image processing device that reads the addresses from the pieces of mail.

To read the address from each piece of mail, the image processing device obtains image data of the piece of mail containing an address region in which the address is present. Thereafter, the image processing device extracts the address region from the obtained image data based on the form or the like of the piece of mail and then reads the address from the extracted address region.

Pieces of mail are sometimes those that are sent in batches by the same sender and that have the same form but different addresses (hereinafter these pieces of mail are referred to as high-volume pieces of mail) and normally the sorters successively sort such high-volume pieces of mail in batches.

Occasionally, the image processing devices might not accurately extract address regions depending on their forms and thereby they might fail to read the addresses. In this situation, the sorters cannot sort the pieces of mail.

In particular, if address regions cannot be extracted from high-volume pieces of mail because of their form, the addresses cannot be read for all the pieces of mail and thereby pieces of mail that cannot be sorted successively occur.

As a technology that solves such a problem, Patent Document 1 (JP8-103731A) presents a sorter in which image data of high-volume pieces of mail and the positions of their address regions have been correlatively stored and then high-volume pieces of mail are sorted in such a manner that the position of the address region correlated with image data selected by the operator of the sorter based on the form of the pieces of mail is extracted as the address region of the pieces of mail.

According to the image processing device presented in Patent Document 1, since the position of the address region correlated with image data selected by the operator is extracted as the address region of pieces of mail, the address region can be prevented from being incorrectly extracted and thereby high-volume pieces of mail can be prevented from successively becoming unsortable.

In addition, since high-volume pieces of mail have the same forms, once the operator selects image data, the image processing device can successively extract the address region based on the selected image data.

### RELATED ART LITERATURE

### PATENT LITERATURE

Patent Literature 1: JP8-103731A, Publication

### DISCLOSURE OF THE INVENTION

However, high-volume pieces of mail might contain those that cannot be sorted in batches by the sorter. When such pieces of mail are sorted by the sorter presented in Patent Document 1, since pieces of mail having the same form do not succeed, whenever the form of pieces of mail changes, the operator needs to select image data corresponding to the form and thereby the sorting speed would lower as a problem that might arise.

An object of the present invention is to provide an image processing device, an image processing method, a sorter, and a program that can prevent the sorting speeds of pieces of mail from becoming lower.

### SUMMARY OF THE INVENTION

To accomplish the foregoing object, an image processing device of the present invention is an image processing device that reads an address of a piece of mail, comprising:
a storage section that correlatively stores image data of the piece of mail containing an address region in which the address of said piece of mail is present and region data that represents a position of said address region of the piece of mail;
an obtaining section that obtains image data of said piece of mail;
a search section that searches said storage section for image data that match the image data obtained by said obtaining section with respect to regions other than said address region;
an extraction section that extracts a region represented by region data correlated with image data retrieved by said search section as an address region of said piece of mail from the image data obtained by said obtaining section; and
a read section that reads an address from the address region extracted by said extraction section.

To accomplish the foregoing object, an image processing method of the present invention is an image processing method for an image processing device that reads an address of a piece of mail, comprising:
correlatively storing image data of the piece of mail containing an address region in which the address of said piece of mail is present and region data that represents a position of said address region of the piece of mail;
obtaining image data of said piece of mail;
searching said stored image data for image data that match said obtained image data with respect to regions other than said address region;
extracting a region represented by region data correlated with said retrieved image data as an address region of said piece of mail from said obtained image data; and
reading an address from said extracted address region.

To accomplish the foregoing object, a sorter of the present invention is a sorter, comprising:
a supply section that supplies a piece of mail;
an image processing section that reads an address of the piece of mail supplied by said supply section; and
a sort section that sorts said piece of mail corresponding to said address read by said image processing section,
wherein said image processing section includes:
a storage section that correlatively stores image data of the piece of mail containing an address region in which the address of said piece of mail is present and region data that represents a position of said address region of the piece of mail;
an obtaining section that obtains image data of said piece of mail;
a search section that searches said storage section for image data that match the image data obtained by said obtaining section with respect to regions other than said address region;
an extraction section that extracts a region represented by region data correlated with image data retrieved by said search section as an address region of said piece of mail from the image data obtained by said obtaining section; and
a read section that reads an address from the address region extracted by said extraction section.

To accomplish the foregoing object, a program of the present invention causes an image processing device that reads an address of a piece of mail to execute processes, comprising:
a storage process that correlatively stores image data of the piece of mail containing an address region in which the address of said piece of mail is present and region data that represents a position of said address region of the piece of mail;
an obtaining process that obtains image data of said piece of mail;
a searching process that searches the image data stored by said storage process for image data that match said obtained image data with respect to regions other than said address region;
an extraction process that extracts a region represented by region data correlated with the image data retrieved by said search process as an address region of said piece of mail from the image data obtained by said obtaining process; and
a read process that reads an address from the address region extracted by said extraction process.

According to the present invention, the image processing device correlatively pre-stores image of pieces of mail data containing address regions and region data that represent the positions of the address regions of the pieces of mail, searches for image data that match the image data of the obtained pieces of mail with respect to regions other than the address region, and extracts the region represented by the region data correlated with the retrieved image data as an address region.

Thus, since the image processing device extracts the region represented by the region data correlated with the retrieved image data as the address region of pieces of mail, the image processing device can prevent itself from failing to extract the address region and also even if the forms of pieces of mail change, since the operator does not need to select image data, the sorting speeds of the image processing device can be prevented from becoming lower.

### BRIEF DESCRIPTION OF DRAWINGS

[Fig. 1] is a block diagram showing the structure of an image processing device according to an embodiment of the present invention.
[Fig. 2] is a flow chart showing an example of the operation of a control section shown in Fig. 1.
[Fig. 3] is a flow chart showing another example of the operation of the control section shown in Fig. 1.
[Fig. 4] is a flow chart showing an example of the operation of a normal process performed by the image processing device shown in Fig. 1.
[Fig. 5] is a flow chart showing an example of the operation of a high-volume batch process performed by the image processing device shown in Fig. 1.
[Fig. 6] is a schematic diagram showing an example of data stored in a storage section shown in Fig. 1.
[Fig. 7] is a schematic diagram showing another example of data stored in the storage section shown in Fig. 1.
[Fig. 8] is a flow chart showing an example of the operation of a high-volume bulk process performed by the image processing device shown in Fig. 1.
[Fig. 9] is a schematic diagram showing another example of the operation of the high-volume bulk process performed by the image processing device shown in Fig. 1.
[Fig. 10] is a schematic diagram showing the structure of a sorter according to an example of the present invention.

### EXEMPLARY EMBODIMENTS

Hereinafter, embodiments of the present invention will be described with reference to the accompanied drawings.

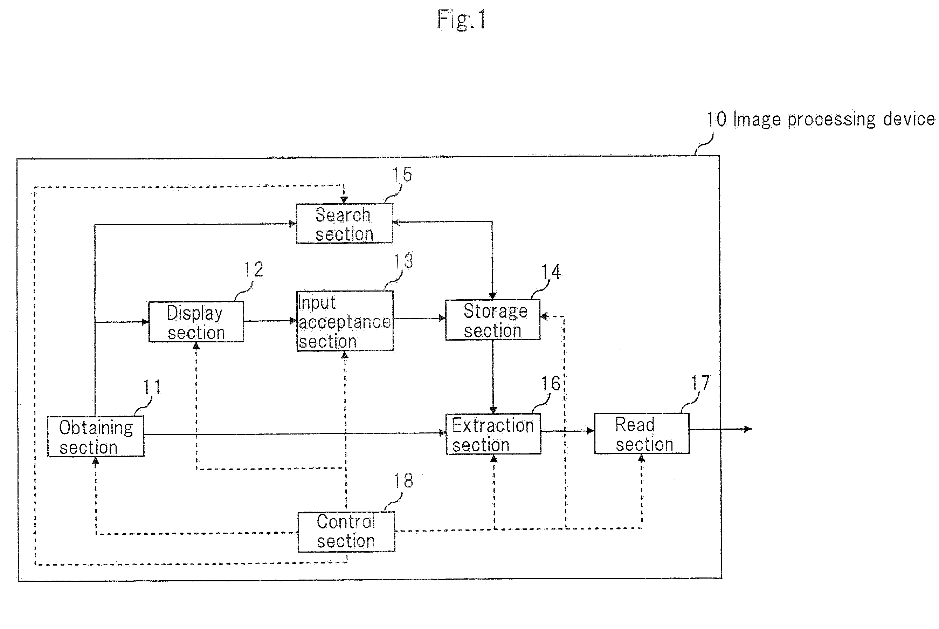

Fig. 1 is a block diagram showing the structure of image processing device 10 according to an embodiment of the present invention.

In Fig. 1, solid lines represent data streams, whereas dotted lines represent control signal streams.

When image processing device 10 according to this embodiment reads addresses of pieces of mail, image processing device 10 is set up to any one of the following three processing modes from the outside.

In other words, any one mode from among a high-volume batch mode, in which the image processing device performs a high-volume batch process that successively reads addresses of pieces of mail, a high-volume bulk mode, in which the image processing device performs a high-volume bulk process that reads addresses of high-volume pieces of mail that have not been processed in the high-volume batch process, and a normal process mode, in which the image processing device performs a normal process that reads addresses of pieces of mail that are not high-volume pieces of mail, can be selected

Image processing device 10 shown in Fig. 1 has obtaining section 11, display section 12, input acceptance section 13, storage section 14, search section 15, extraction section 16, read section 17, and control section 18.

Obtaining section 11 obtains image data of pieces of mail containing an address region and outputs the obtained image data to display section 12, search section 15, and extraction section 16 corresponding to the processing mode that has been set up.

Display section 12 displays image data that are output from obtaining section 11.

Input acceptance section 13 accepts from the outside an input of the position of an address region for pieces of mail whose image data appear on display section 12.

The position of an address region can be input for example by touching a dedicated pen on a touch panel placed on display section 12.

Storage section 14 correlatively stores image data of pieces of mail containing address regions and region data that represent positions of address regions of pieces of mail that are input.

In addition, storage section 14 outputs to extraction section 16 region data correlated with image data that are output from obtaining section 11 to extraction section 16.

Search section 15 searches storage section 14 for image data that match image data that are output from obtaining section 11.

Extraction section 16 extracts an address region from the image data that are output from obtaining section 11 and outputs image data of the extracted address region to read section 17.

In this case, when region data have been output from storage section 14, extraction section 16 extracts a region represented by the region data as an address region; when region data have not been output, extraction section 16 extracts an address region corresponding to a known algorithm from the form or the like of pieces of mail.

Read section 17 reads addresses of pieces of mail from image data in the address region that is output from extraction section 16.

Control section 18 controls operations of individual sections corresponding to the processing mode that has been set up.

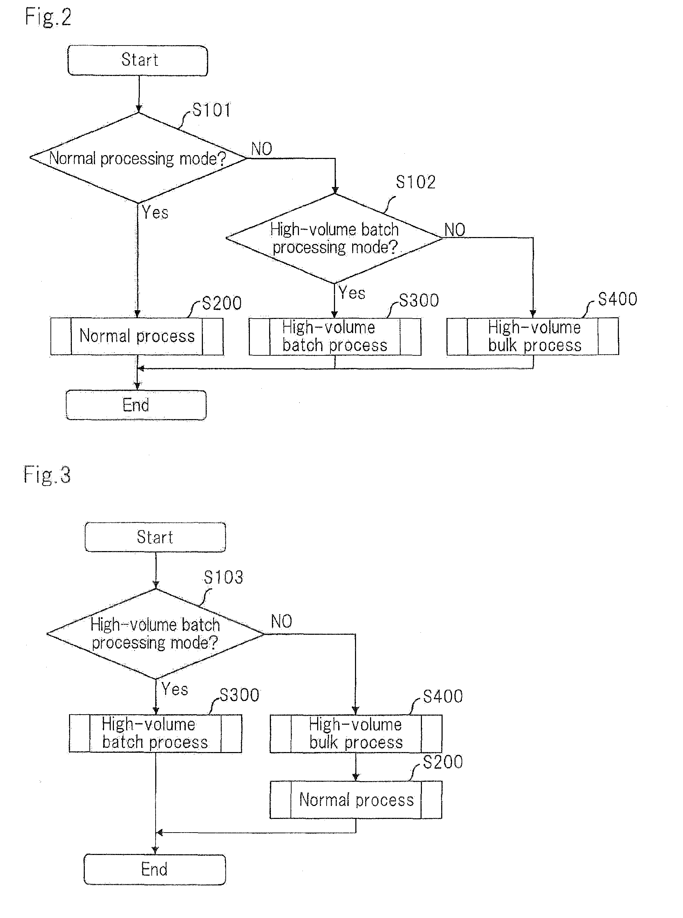

Next, the operation of control section 18 will be described with reference to Fig. 2 and Fig. 3.

Fig. 2 is a flow chart showing an example of the operation of control section 18.

First, control section 18 determines whether or not the normal processing mode has been set up (at step S101).

If the normal processing mode has been set up (at step S101: YES), control section 18 outputs control signals to obtaining section 11, extraction section 16, and read section 17 so as to perform the normal process (at step S200).

If the normal processing mode has not been set up (at step S101: NO), control section 18 determines whether or not the high-volume batch processing mode has been set up (at step S102).

If the high-volume batch processing mode has been set up (at step S102: YES), control section 18 outputs control signals to obtaining section 11, display section 12, input acceptance section 13, storage section 14, extraction section 16, and read section 17 so as to perform the high-volume batch process (at step S300).

If the high-volume batch mode has not been set up (at step S102: NO), control section 18 outputs control signals to obtaining section 11, storage section 14, search section 15, extraction section 16, and read section 17 so as to perform the high-volume bulk process (at step S400).

The operations of the individual process modes will be described later.

Fig. 3 is a schematic diagram showing another example of the operation of control section 18. In Fig. 3, similar processes to those in Fig. 2 will be denoted by similar reference numerals and their description will be omitted.

First, control section 18 determines whether or not the high-volume batch processing mode has been set up (at step S103).

If the high-volume batch processing mode has been set up (at step S103: YES), control section 18 outputs control signals to individual sections so as to perform the high-volume batch process (at step S300).

If the high-volume batch processing mode has not been set up (at step S103: NO), control section 18 outputs control signals to individual sections so as to perform the high-volume bulk process (at step S400).

After the high-volume batch process has been performed, control section 18 outputs control signals to individual sections so as to perform the normal process for pieces of mail whose addresses have not been read (at step S200).

Next, the operation of the normal process performed by image processing device 10 will be described.

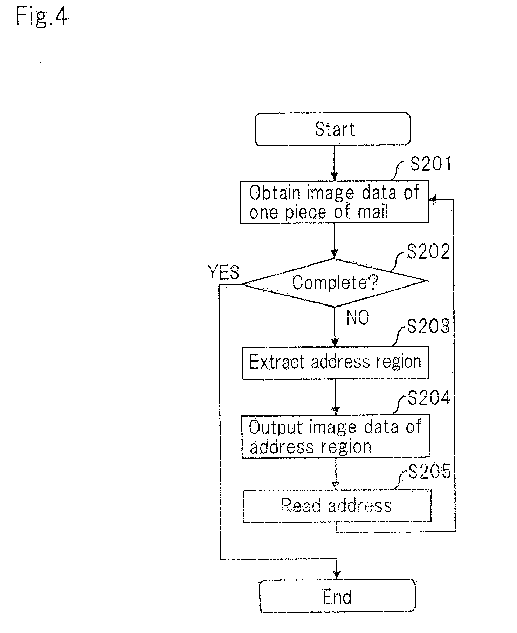

Fig. 4 is a flow chart showing an example of the operation of the normal process performed by image processing device 10.

Obtaining section 11 obtains image data of one mail piece containing an address region (at step S201).

It is assumed that obtaining section 11 obtains image data that have the same form as image data of pieces of mail stored in storage section 14.

Control section 18 determines whether or not the normal process should be completed based on whether or not there are pieces of mail from which image data are obtained (at step S202).

If there are no pieces of mail from which image data are obtained and therefore it is determined that the normal process should be completed (at step S202: YES), control section 18 outputs control signals to individual sections so as to complete the normal process.

If it is determined that the normal process should not be completed (at step S202: NO), obtaining section 11 outputs the obtained image data to extraction section 16.

Extraction section 16 extracts an address region from the image data corresponding to the known algorithm (at step S203) and outputs image data of the extracted address region to read section 17 (at step S204).

Read section 17 reads the address from the image data of the address region that has been output (at step S205).

Next, the operation of the high-volume batch process performed by image processing device 10 will be described.

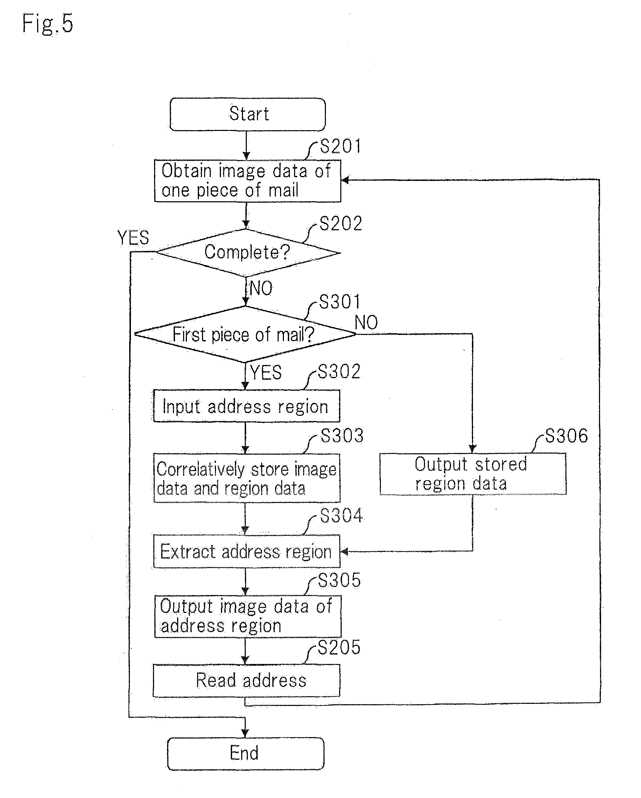

Fig. 5 is a flow chart showing an example of the operation of the high-volume batch process performed by image processing device 10.

In Fig. 5, similar processes to those in Fig. 4 will be denoted by similar reference numerals and their description will be omitted.

Control section 18 determines whether or not the mail piece whose image data have been obtained by obtaining section 11 is the first mail piece whose image data have been obtained after the high-volume batch processing mode has been set up (at step S301).

If the mail piece whose image data have been obtained is the first mail piece (at step S301: YES), control section 18 causes the image data obtained by obtaining section 11 to be output to display section 12.

Display section 12 displays the obtained image data and then input acceptance section 13 accepts an input of the position of an address region for a mail piece whose image data appear on display section 12 from the outside (at step S302).

Storage section 14 correlatively stores the obtained image data and the region data that represent the position of the address region that has been input through input acceptance section 13 (at step S303).

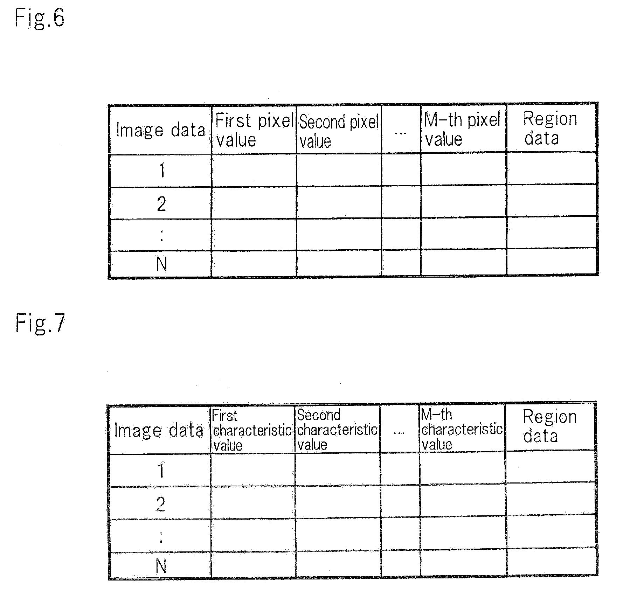

Fig. 6 and Fig. 7 are schematic diagrams showing examples of data stored in storage section 14.

In the example shown in Fig. 6, image data are represented by pixel values of individual pixels that compose the image data.

In the example shown in Fig. 7, image data are represented by characteristic values of characteristic vectors whose elements are pixel values or the like of individual pixels and they are correlatively stored together with region data.

Alternatively, when an address region is input in a rectangular shape, region data can be represented by coordinates of three of four vertexes of the rectangular shape.

Thereafter, obtaining section 11 outputs the obtained image data to extraction section 16. Storage section 14 outputs region data correlated with the obtained image data to extraction section 16.

Extraction section 16 extracts the region represented by the region data as an address region from the obtained image data (at step S304) and outputs image data of the extracted address region to read section 17 (at step S305).

In contrast, if the mail piece whose image data have been obtained by obtaining section 11 is not the first mail piece (at step S301: NO), obtaining section 11 outputs the obtained image data to extraction section 16.

Then, storage section 14 outputs region data correlated with the image data obtained by obtaining section 11 to extraction section 16 (at step S306),

Extraction section 16 extracts the region represented by the region data that are output from storage section 14 as an address region from the obtained image data.

Next, the operation of the high-volume bulk process performed by image processing device 10 will be described.

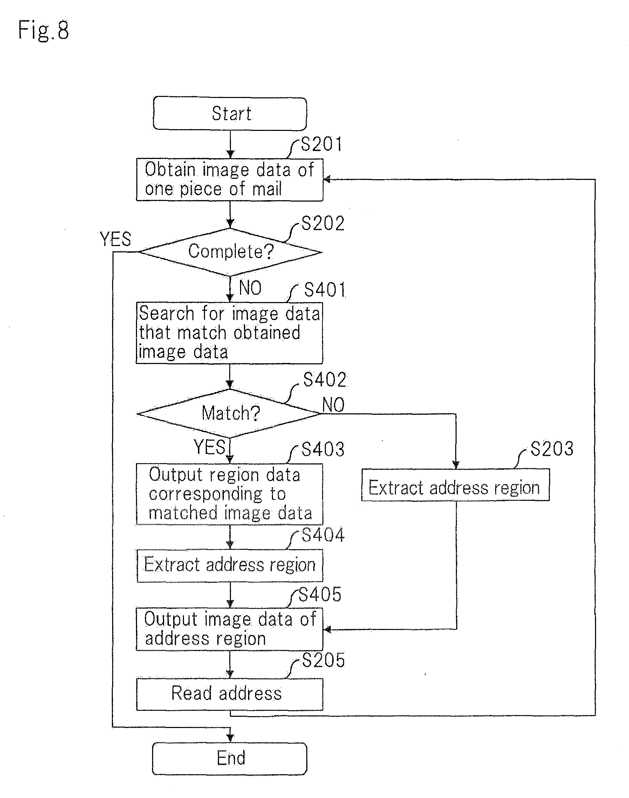

Fig. 8 is a flow chart showing an example of the operation of the high-volume bulk process performed by image processing device 10.

In Fig. 8, similar processes to those in Fig. 4 will be denoted by similar reference numerals and their description will be omitted.

Search section 15 searches storage section 14 for image data that match the image data obtained by obtaining section 11 with respect to regions other than the address region (at step S401).

This means that since an address is present in the address region and the address differs in each mail piece, image data are retrieved with respect to regions other than the address region.

Alternatively, image data may be retrieved, for example, based on the similarity of data samples.

The similarity can be obtained in such a manner that image data obtained by obtaining section 11 and image data stored in storage section 14 are represented by characteristic vectors and by then calculating the cosine between the two vectors extracted from both items of image data.

If image data that match the image data obtained by obtaining section 11 with respect to regions other than the address region have not been retrieved (at step S402: NO), extraction section 16 outputs image data of the address region extracted based on the form or the like of pieces of mail to extraction section 16.

If image data that matches the image data obtained by obtaining section 11 with respect to regions other than the address region from storage section 14 have been retrieved (at step S402: YES), region data correlated with the retrieved image data are output from storage section 14 to extraction section 16 (at step S403).

Extraction section 16 extracts a region represented by the region data that are output form storage section 14 as an address region from the obtained image data (at step S404) and outputs the image data of the extracted address region to read section 17 (at step S405).

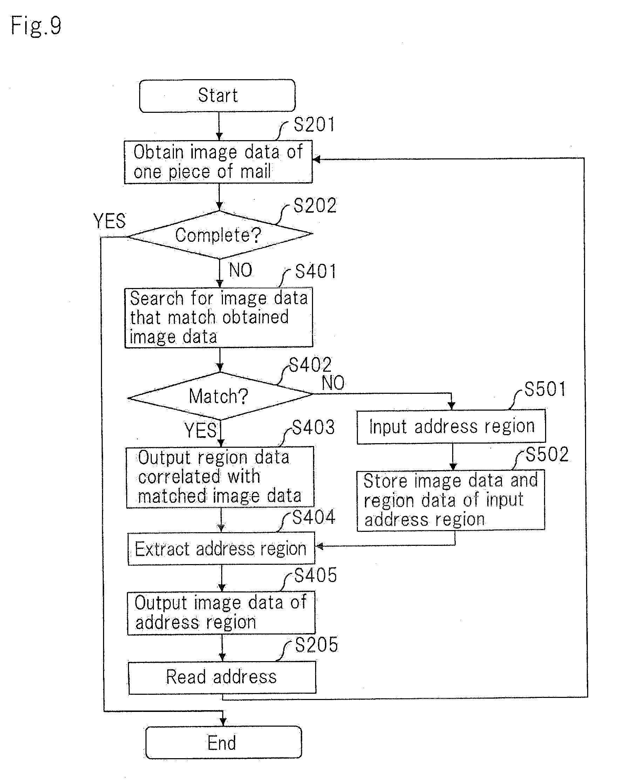

Fig. 9 is a flow chart showing another example of the high-volume bulk process performed by image processing device 10.

In Fig. 9, similar processes to those in Fig. 8 will be denoted by similar reference numerals and their description will be omitted.

If image data that match the image data obtained by obtaining section 11 with respect to regions other than the address region have not been retrieved (at step S402: NO), display section 12 displays the obtained image data.

Input acceptance section 13 accepts from the outside an input of the position of the address region to the image data displayed on display section 12 (at step S501).

Storage section 14 correlatively stores the image data obtained by obtaining section 11 and the region data that represents the position of the input address region (at step S502) and outputs the region data to extraction section 16.

If image data that match the image data obtained by obtaining section 11 have not been retrieved, since region data that represent the position of an input address region are stored, when addresses of pieces of mail having the same form are read, the address region can be extracted based on the stored region data.

Thus, according to this embodiment, image processing device 10 correlatively pre-stores image data of pieces of mail containing address regions and region data that represent the position of the address region, searches for stored image data that match obtained image data of pieces of mail with respect to regions other than the address region, and thereby extracts the region represented by the region data correlated with the retrieved image data as an address region.

Thus, since image processing device 10 extracts a region represented by region data correlated with stored image data that match the obtained image data with respect to regions other than the address region as an address region, the address region can be prevented from being incorrectly extracted and even if the forms of pieces of mail change, since the operator does not need to select image data, the sorting speeds can be prevented from becoming lower.

### WORKING EXAMPLE

Hereinafter, an example of the present invention will be described.

This working example is an example of sorter 20 that is provided with image processing device 10 according to an embodiment of the present invention.

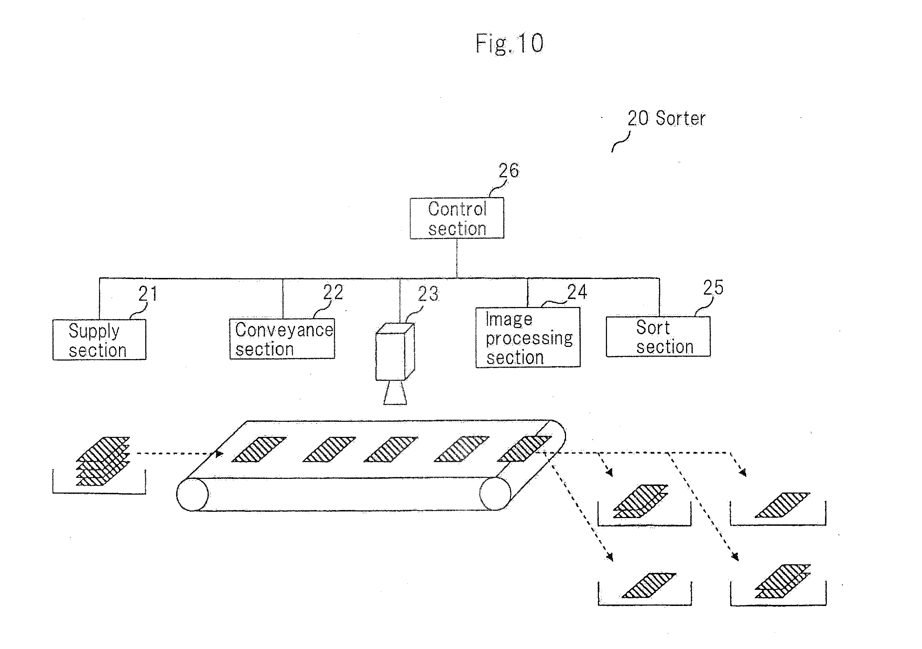

Fig. 10 is a schematic diagram showing the structure of sorter 20 according to this example.

In Fig. 10, solid lines represent data and control signal streams and dotted lines represent streams of pieces of mail.

Sorter 20 shown in Fig. 10 is provided with supply section 21, conveyance section 22, scanner section 23, image processing section 24, sort section 25, and control section 26.

Image processing device 10 according to an embodiment of the present invention is applied to image processing section 24.

Supply section 21 supplies pieces of mail one by one to conveyance section 22.

Conveyance section 22 conveys pieces of mail supplied from supply section 21 to sort section 25.

Scanner section 23 is a photoelectric converting mechanism that captures images of pieces of mail and scans pieces of mail conveyed by conveyance section 22.

Image processing section 24 reads addresses from image data of pieces of mail that have been scanned and outputs the addresses to sort section 25.

Sort section 25 sorts the pieces of mail based on the addresses that have been output from image processing section 24.

Control section 26 controls the foregoing individual sections.

Next, the operation of sorter 20 according to this working example will be described.

Image processing section 24 extracts an address region from image data of pieces of mail supplied from supply section 21 corresponding to the processing mode that has been set up and reads addresses of the pieces of mail.

Sort section 25 sorts the pieces of mail based on the addressed read by image processing section 24.

The method performed by image processing device 10 and sorter 20 according to the present invention may be applied to a program that causes a computer to execute the method. Alternatively, the program may be stored on a storage medium and may also be provided to the outside through a network.

Now, with reference to the embodiments, the present invention has been described. However, it should be understood by those skilled in the art that the structure and details of the present invention may be changed in various manners without departing from the scope of the present invention.

The present application claims priority based on Japanese Patent Application JP 2009-215626 filed on September 17, 2009, the entire contents of which are incorporated herein by reference in its entirety.

## Claims

1. An image processing device that reads an address of a piece of mail, comprising:
a storage section that correlatively stores image data of the piece of mail containing an address region in which the address of said piece of mail is present and region data that represents a position of said address region of the piece of mail;
an obtaining section that obtains image data of said piece of mail;
a search section that searches said storage section for image data that match the image data obtained by said obtaining section with respect to regions other than said address region;
an extraction section that extracts a region represented by region data correlated with image data retrieved by said search section as an address region of said piece of mail from the image data obtained by said obtaining section; and
a read section that reads an address from the address region extracted by said extraction section.

2. The image processing device according to claim 1, further comprising:
a display section that displays the image data obtained by said obtaining section; and
an input acceptance section that accepts an input of a position of said address region of a piece of mail whose image data appear on said display section if image data that match the image data obtained by said obtaining section with respect to regions other than said address region have not been retrieved.

3. The image processing device according to claim 2,
wherein said storage section correlatively stores the image data obtained by said obtaining section and region data that represent the position of the address region that has been accepted by said input accepting section.

4. An image processing method for an image processing device that reads an address of a piece of mail, comprising:
correlatively storing image data of the piece of mail containing an address region in which the address of said piece of mail is present and region data that represents a position of said address region of the piece of mail;
obtaining image data of said piece of mail;
searching said stored image data for image data that match said obtained image data with respect to regions other than said address region;
extracting a region represented by region data correlated with said retrieved image data as an address region of said piece of mail from said obtained image data; and
reading an address from said extracted address region.

5. The image processing method according to claim 4, further comprising:
displaying said obtained image data; and
accepting an input of a position of said address region of a piece of mail whose image data appear if image data that match said obtained image data with respect to regions other than said address region have not been retrieved.

6. The image processing method according to claim 5,
wherein said storage step is performed by correlatively storing said obtained image data and region data that represents the position of said accepted address region.

7. A sorter, comprising:
a supply section that supplies a piece of mail;
an image processing section that reads an address of the piece of mail supplied by said supply section; and
a sort section that sorts said piece of mail corresponding to said address read by said image processing section,
wherein said image processing section includes:
a storage section that correlatively stores image data of the piece of mail containing an address region in which the address of said piece of mail is present and region data that represent a position of said address region of the piece of mail;
an obtaining section that obtains image data of said piece of mail;
a search section that searches said storage section for image data that match the image data obtained by said obtaining section with respect to regions other than said address region;
an extraction section that extracts a region represented by region data correlated with image data retrieved by said search section as an address region of said piece of mail from the image data obtained by said obtaining section; and
a read section that reads an address from the address region extracted by said extraction section.

8. A program that causes an image processing device that reads an address of a piece of mail to execute processes, comprising:
a storage process that correlatively stores image data of the piece of mail containing an address region in which the address of said piece of mail is present and region data that represents a position of said address region of the piece of mail;
an obtaining process that obtains image data of said piece of mail;
a searching process that searches the image data stored by said storage process for image data that match said obtained image data with respect to regions other than said address region;
an extraction process that extracts a region represented by region data correlated with the image data retrieved by said search process as an address region of said piece of mail from the image data obtained by said obtaining process; and
a read process that reads an address from the address region extracted by said extraction process.
